# EUROPÄISCHE PATENTSCHRIFT

(11) **EP 0 876 893 B1**
(45) Veröffentlichungstag und Bekanntmachung des Hinweises auf die Patenterteilung: **27.11.2002**
(21) Anmeldenummer: 98104450.6
(22) Anmeldetag: 12.03.1998
(51) Int. Cl.: B29C 45/14, B29C 45/26

(54) **Vorrichtung zum Spritzgiessen von Kunststoffteilen**
Method for injection moulding of plastic articles
Procédé de moulage par injection d'articles en matière plastique

(30) Priorität: 08.05.1997 DE 19719314
(43) Veröffentlichungstag der Anmeldung: 11.11.1998
(73) Patentinhaber: Schade GmbH & Co. KG, 58840 Plettenberg (DE)
(72) Erfinder: Göhr, Kurt, 57439 Attendorn (DE); Erner, Wolfgang, 58640 Iserlohn (DE)
(74) Vertreter: Patentanwälte Dipl.-Ing. Conrad Köchling Dipl.-Ing. Conrad-Joachim Köchling

(56) Entgegenhaltungen:
- EP-A- 0 081 671
- EP-A- 0 127 546
- EP-A- 0 401 091
- WO-A-87/04973
- DE-A- 3 227 014
- DE-A- 3 532 424
- DE-U- 9 408 981
- PATENT ABSTRACTS OF JAPAN vol. 7, no. 44 (M-195), 22. Februar 1983 & JP 57 193334 A (HITACHI SEISAKUSHO KK), 27. November 1982
- PATENT ABSTRACTS OF JAPAN vol. 95, no. 9, 31. Oktober 1995 & JP 07 156193 A (TOYODA MACH WORKS LTD), 20. Juni 1995
- PATENT ABSTRACTS OF JAPAN vol. 16, no. 129 (M-1228), 2. April 1992 & JP 03 292120 A (TOYODA GOSEI CO LTD), 24. Dezember 1991
- PATENT ABSTRACTS OF JAPAN vol. 14, no. 575 (M-1062), 20. Dezember 1990 & JP 02 249616 A (TAKAGI SEIKO), 5. Oktober 1990

## Beschreibung

Die Erfindung betrifft eine Vorrichtung zum Spritzgießen von Kunststoffteilen, bestehend aus einer aus wenigstens zwei Formteilen, gebildeten Spritzgießform mit mindestens einer Einlaßöffnung für Spritzmasse, wobei die Formteile Dichtkanten aufweisen, die bei geschlossener Spritzgießform dicht aneinander anliegen oder dicht an einer Gegenfläche des jeweils anderen Formteiles anliegen, wobei ferner in die Spritzgießform ein Werkstück, z.B. eine Glasscheibe, einlegbar ist, an das oder an dessen Rand eine Einfassung aus Kunststoff angespritzt wird, wobei die Formteile Trennstege aufweisen, die zueinander hin gerichtet verlaufen und bei geschlossener Spritzgießform unter Ausbildung von Dichtkanten dichtend an Flächen des Werkstückes anliegen, so dass eine abgedichtete Ausnehmung zur Spritzformung der Einfassung gebildet ist, wobei schließlich die Dichtkanten der Formteile durch federelastische Elemente gebildet und parallel zur Schließrichtung der Formteile der Spritzgießform einstellbar sind.

Im Stand der Technik ist es üblich, dass die Außenrandkante der Spritzform in der Teilungsebene Dichtkanten aufweist, mittels derer verhindert wird, dass die Spritzmasse aus der eigentlichen Formhöhlung der Spritzgießform austreten kann. Es sind auch Spritzgießformen mit so genannte Schiebern bekannt, wobei auch im Bereich des Schiebers Dichtkanten vorgesehen sind, um das Austreten von Spritzmasse zu verhindern.

Auch sind gattungsgemäße Vorrichtungen bekannt, in die ein Werkstück, beispielsweise eine Glasscheibe, eingelegt wird, um an deren Rand eine Einfassung aus Kunststoff anzuspritzen.

Eine solche Ausbildung ist beispielsweise aus der DE 32 16 063 C3 bekannt und aus dem G 94 08 981.7 ein Formwerkzeug zum Anformen einer Dichtung an eine Glasscheibe, wobei das Formwerkzeug aus einem Ober- und einem Unterwerkzeug besteht und in den jeweiligen Bereichen des Oberwerkzeuges mit wenigstens einem beweglichen Einsatzstück versehen ist.

Aus der EP A 0 401 091 ist ebenfalls eine Vorrichtung für eine Spritzgießform bekannt, wobei ein Werkstück in die Spritzgießform einlegbar ist, an dessen Rand eine Einfassung aus Kunststoff angespritzt wird und die zur Spritzformung der Einfassung vorgesehenen Dichtkanten durch ein in den vorgesehenen Kammern befindliches, einstellbares Druckfluid gebildet sind und damit dichtend gegen das Werkstück gepresst werden.

Aus der DE 32 27 014 A1 ist eine Vorrichtung zum Druckspritzen eines Kantenschutzes aus Kunststoff bekannt, wobei in die Spritzgußform beispielsweise eine Platte aus Holzwerkstoffen eingelegt wird und zur Abdichtung des Formraumes zur Platte hin Dichtleisten aus Stahl vorgesehen sind, die in den Formhälften begrenzt verschieblich gelagert sind und unter Wirkung einer elastischen Preßkraft stehen.

Aus der EP 0 081 671 ebenfalls eine Vorrichtung zum Umspritzen der umlaufenden Schnittkanten von Platten aus Holzwerkstoff bekannt.

Aus den Druckschriften JP-A-57 193 334, JP-A-07 156 193, JP-A-03 292 120, DE-A-35 32 424, WO-A-87 04 973 und EP-A-0 127 546 sind weitere gattungsgemäße Vorrichtungen bekannt.

Bei allen derartigen Vorrichtungen wird es als Nachteil angesehen, dass nach einer entsprechenden Anzahl von Spritzzyklen die Dichtkanten verschleißen und somit eine aufwendige Nachbearbeitung der Formteile und dergleichen erforderlich ist.

Ausgehend von diesem Stand der Technik liegt der Erfindung die Aufgabe zugrunde, eine Vorrichtung gattungsgemäßer Art zu schaffen, die es gestattet, bei einem Verschleiß der Dichtkanten in einfacher Weise die Funktion des Spritzgießwerkzeuges wieder herzustellen beziehungsweise die Dichtkanten entsprechend ihrer Zweckbestimmung auszubilden.

Zur Lösung dieser Aufgabe wird vorgeschlagen, dass jedes federelastische Element durch ein Schubgliederband gebildet ist, das eine Vielzahl von im Wesentlichen quer zum Längsverlauf der zur Schließrichtung der Formteile einstellbaren Dichtkante gerichtete, unmittelbar benachbarte, formsteife Stabelemente aufweist, die in eine Trägerschicht aus flexiblem Material eingesetzt oder von dieser gehalten sind, wobei die Trägerschicht an dem die Dichtkante tragenden Formteil fixiert ist, und dass der Abstand zueinander benachbarter Stabelemente des Schubgliederbandes so gering ist, dass ein Einfließen von Spritzmasse verhindert ist.

Vorteilhaft ist, dass die federelastischen Elemente mittels Unterlagen oder durch Stellmittel relativ zur Trennebene des Formteiles verstellbar und feststellbar sind.

Hierdurch ist es in einfacher Weise möglich, die Dichtkanten auch partiell in Teilbereichen nachzusetzen, sofern in einem Teilbereich ein Verschleiß der Dichtkante erfolgt und zwar in den Bereichen, die am stärksten verschleißbeansprucht sind. Die übrigen Bereiche der Dichtkanten können dabei in herkömmlicher Weise als einstückige Elemente der Formteile ausgebildet sein.

Ebenso sind die Dichtkanten auch vollständig parallel zur Schließrichtung der Formteile der Spritzgießform einstellbar, so dass bei einem Verschleiß der Dichtkanten diese nachgestellt werden können, so dass die Spritzgießform weiter zur Herstellung entsprechender Teile verwendet werden kann, ohne dass es eines großen Aufwandes bedarf.

Unter Umständen kann dabei vorgesehen sein, dass die Unterlagen durch zwischen der Dichtkante und dem sie tragenden Formteil angeordnete Distanzleisten gebildet sind.

Alternativ oder zusätzlich kann auch vorgesehen sein, dass die Unterlagen durch zwischen die Dichtkante und das sie tragenden Formteil eingeschobene Distanzkeile gebildet sind.

Weiterhin kann alternativ oder zusätzlich auch vorgesehen sein, dass die Stellmittel durch zwischen der Dichtkante und dem sie tragenden Formteil eingeschraubte Stellschrauben gebildet sind.

Die Viskosität der Spritzmasse ist üblicherweise nicht so groß, dass ein Einfließen von Spritzmasse in den Spalt zwischen den benachbarten fingerartigen Federelementen zu erwarten ist. In jedem Falle kann der Spalt so gering ausgebildet sein, dass ein Einfließen von Spritzmasse verhindert ist. Beim Spritzvorgang erstarrt die Spritzmasse in der Spritzform so schnell, dass ein Einfließen von Spritzmasse in die Schlitze ohnehin nicht zu erwarten ist.

Eine besonders bevorzugte Weiterbildung wird darin gesehen, dass die Dichtkanten partiell oder vollständig parallel zur Schließrichtung der Formteile der Spritzgießform federnd nachgiebig sind.

Bei der im Stand der Technik aus der DE 32 16 063 C3 bekannten Spritzgießvorrichtung sind schon in Freiräume der Formteile Widerlager eingesetzt, die bei geschlossener Gießform beim Umspritzen des Randes einer Scheibe mit Kunststoff beide Seiten der zu umspritzenden Scheiben eng anliegend berühren. Die die Freiräume begrenzenden Trennstege verspringen dabei gegenüber den äußeren Seiten der Scheibe, so dass beidseitig der Scheibe ein Ringspalt entsteht. Der mit einem Kunststoff zu um spritzende Rand der Scheibe liegt außerhalb der Trennstege. Da die Abstände der Trennstege von der Scheibe bei der bekannten Spritzgießform sehr gering sind, wird beim Spritzvorgang ein Teil der verdrängten Luft zu einem Luftpolster komprimiert, so dass es dort zwangsläufig zu einer Abdichtung zwischen den Freiräumen und den Widerlagern kommt.

Bei dieser an sich bewährten Ausführung hat es sich herausgestellt, dass sich die Widerlager nicht in allen in der Praxis auftretenden Fällen den zum Teil stark variierenden Scheibenkonturen, die im Normalfall gekrümmt sind, ausreichend anpassen. Dies führt dann dazu, dass die notwendigen Klemmkräfte der Widerlager oft zu gering ausfallen. Nachteilig ist auch, dass die Dichtwirkung des sich zwischen den Trennstegen bildenden Luftkissens in vielen Fällen nicht ausreicht, um ein Eindringen des Kunststoffes, der für das Umspritzen des Scheibenrandes vorgesehen ist, in die mittleren Freiräume zu verhindern. Durch die erfindungsgemäße Ausbildung dagegen kann die Spritzgießvorrichtung in konstruktiv einfacher Weise so ausgebildet werden, dass eine zuverlässige Anpassung von Dichtkanten der Spritzgießform an alle üblichen Scheibenkonturen beziehungsweise Scheibenkrümmungen erfolgt und das Austreten von Kunststoff aus den die Scheibenränder umschließenden Spritzgießform-Ausnehmungen zuverlässig verhindert wird.

Diese allgemein vorteilhafte Ausbildung ist besonders dann vorzugsweise vorgesehen, wenn bei einer Spritzvorrichtung zum Anspritzen einer den Rand einer Glasscheibe oder eines anderen Werkstückes ganz oder teilweise umfassenden Einfassung aus Kunststoff die Formteile der Spritzgießform Freiräume aufweisen, die von zueinander hin gerichteten Dichtkanten begrenzt sind, gegenüber denen der zu umspritzende Rand der Glasscheibe oder des Werkstückes nach außen in eine Spritzform-Ausnehmung vorsteht, und wenn zur Einspannung der Glasscheibe oder des Werkstückes zumindest an einer Außenfläche der Glasscheibe oder des Werkstückes mindestens eine partiell oder vollständig umlaufende federnd nachgiebige Dichtkante vorgesehen ist.

Die Abdichtung im Bereich der Dichtstege erfolgt an der Glasscheibe oder an dem Werkstück durch eine relativ schmale Kante der federnd nachgiebigen Dichtkante, so dass eine wirksame Dichtsperre zwischen den inneren Freiräumen und den äußeren Formausnehmungen entsteht. Insbesondere dann, wenn die Dichtkante aus knicksteifen, thermisch hoch belastbarem Material, beispielsweise Metall, besteht, werden in der Praxis außerordentlich hohe Standzeiten erreicht. Zudem wird die an ihrem Rand zu umspritzende Scheibe oder dergleichen auf einer gegenüber der gesamten Fläche der Scheibe sehr geringen Fläche ausreichend fest eingespannt. Da die Dichtkante federnd nachgiebig ist, ist eine ausreichende Beweglichkeit sichergestellt, so dass beim Schließen der Formteile eine selbsttätige Anpassung an unterschiedliche Scheibenkrümmungen und Konturen erfolgt. Hierdurch wird die Bruchgefahr von Scheiben während des Produktionsprozesses stark vermindert und damit die Wirtschaftlichkeit bei solchen Massenfertigungen merklich erhöht.

Durch die erfindungsgemäße Ausbildung ist eine Verarbeitung auch größerer Wölbungstoleranzen der Scheiben oder Werkstücke möglich. Die bisher notwendigen Arbeiten zum Umtuschieren der Dichtkanten bei unterschiedlichen Scheibenabmessungen werden ebenso erheblich reduziert wie Reparaturarbeiten. Überspritzungen, die durch Undichtigkeiten im Bereich der Dichtkanten entstehen können, werden weitestgehend vermieden, so dass ein geringer Nacharbeitungsaufwand erforderlich ist. Zudem kann durch die federnd nachgiebige Dichtkantenanordnung die Klemmung der Glasscheibe oder dergleichen erfolgen, so dass gegebenenfalls bisher übliche Positionieranschläge entfallen können und auch eine starre Lage der Scheibe oder dergleichen während des Spritzvorganges gewährleistet ist, ohne dass dazu Anschläge oder dergleichen erforderlich wären. Solche Anschläge führen im Stand der Technik bisweilen zum Scheibenbruch, wenn nämlich z.B. die Scheibe noch nicht bis gegen den Positionieranschlag angelegt ist und Spritzmasse eingespritzt wird, wobei durch den Spritzdruck die Scheibe gegen die Positionieranschläge verschoben wird und dabei die Randkante beschädigt werden kann. Um dies zu vermeiden, ist im Stand der Technik das aufwendige stirnseitige Säumen der Scheiben erforderlich, was durch die erfindungsgemäße Ausbildung entfallen kann.

Besonders bevorzugt ist vorgesehen, dass an beiden Seiten der Glasscheibe oder des Werkstückes zwischen dem entsprechenden Formteil und der Glasscheibe oder dem Werkstück eine federnd nachgiebige Dichtkante, partiell oder vollständig umlaufend, angeordnet ist.

Hierdurch ist eine gleichmäßige Anpassung der federnd nachgiebigen Dichtkante an die Konturen der Scheibe oder dergleichen auf beiden Seiten möglich.

Eine einfach zu handhabende Lösung besteht auch darin, dass bei einer eckigen Glasscheibe oder einem eckigen Werkstück die federnd nachgiebige Dichtkante aus Einzelelementen gebildet ist, wobei die Einzelelemente die Eckbereiche freilassen und in den Eckbereichen starre Dichtkanten in Ergänzung der nachgiebigen Dichtkanten an den Formteilen vorgesehen sind.

Hierbei kann die federnde Dichtkante aus mehreren Einzelelementen gebildet sein, wobei die Eckbereiche jeweils frei bleiben und von starren Dichtkanten gebildet sind, die aus dem Material der Formteile bestehen.

Ebenso wie bei der eingangs beschriebenen einstellbaren Dichtkantenanordnung kann bei den federnd nachgiebigen Dichtkanten in einfacher Weise eine Einstellung erfolgen, indem beispielsweise durch untergelegte Distanzleisten oder Stellschrauben ein Toleranzausgleich vorgenommen wird.

Desweiteren ist bevorzugt vorgesehen, dass die Randkante oder Glasscheibe als orthogonale Trennkante oder Schnittkante ohne Besäumung ausgebildet ist.

Schematisierte Ausführungsbeispiele der Erfindung sind in der Zeichnung dargestellt und im folgenden näher beschrieben.
Es zeigt:

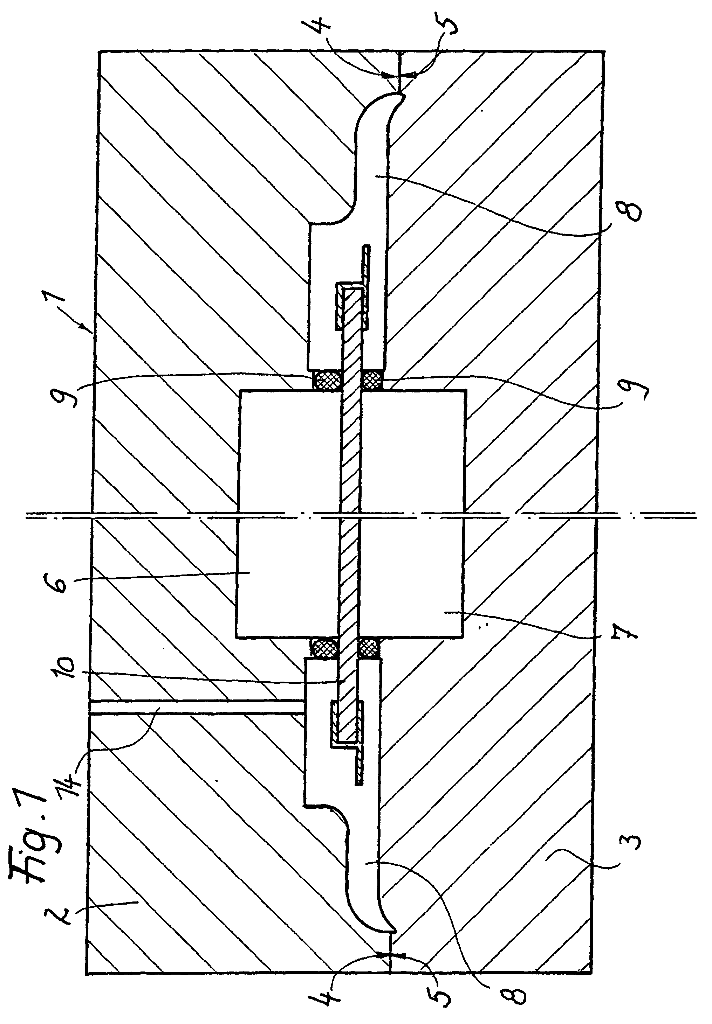

- Figur 1: eine Spritzgießvorrichtung im Querschnitt bei geschlossenen Formteilen;
- Figur 2: einen Ausschnitt in vergrößerter Darstellung;
- Figur 3: ein Formteil der Gießform in Ansicht;
- Figur 4: eine Einzelheit in vergrößerter Darstellung;
- Figur 5-7: weitere Einzelheiten in vergrößerter Darstellung;
- Figur 8 und 9: eine weitere Einzelheit in der Ansicht gemäß Figur 5 und 7.

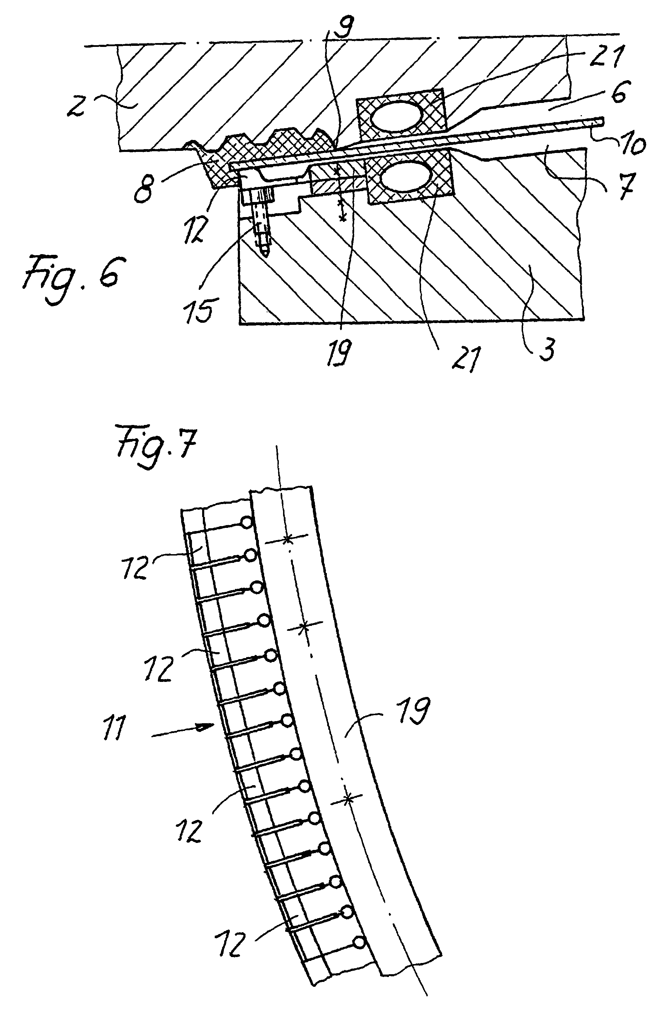

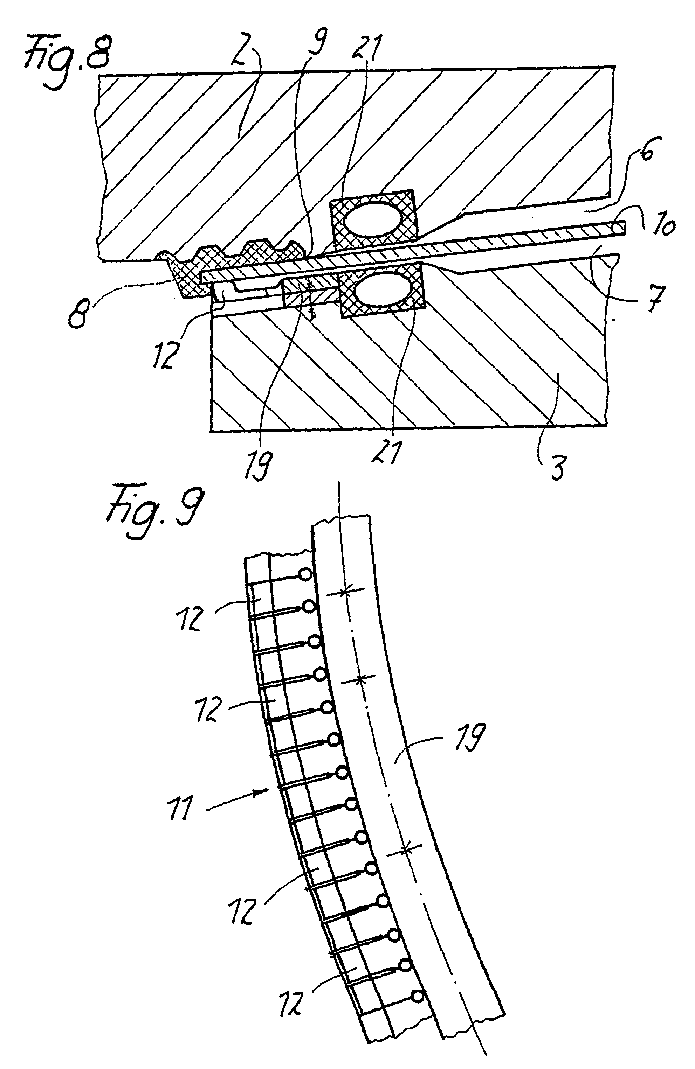

Die Ausführungsformen nach Figur 5 bis 9 sind nicht Teil der Erfindung, insbesondere keine Ausführungsformen der Erfindung.

In der zeichnungsfigur 1 ist schematisch eine Vorrichtung zum Spritzgießen von Kunststoffteilen gezeigt. Sie besteht aus einer Spritzgießform 1 mit zwei Formteilen 2,3 (im Ausführungsbeispiel Formhälften). Die Spritzgießform 1 weist mindestens eine Einlaßöffnung 14 für Spritzmasse auf. Die Formteile 2,3 weisen Dichtkanten auf, die im Bereich der Schließflächen 4,5 im allgemeinen ohne Zwischenlage einer Dichtung gegeneinander gepresst werden. Dabei ist mindestens eine der beiden Schließflächen 4 oder 5 häufig mit einer angeformten Dichtkante ausgebildet. Die Formhälften 2,3 weisen jeweils etwa in der Formmitte befindliche Freiräume 6,7 sowie eine umlaufende Ausnehmung 8 auf, die von den Freiräumen 6,7 durch zwei die Ausnehmung 8 begrenzende, gegeneinander gerichtete, umlaufende Dichtstege 9 begrenzt sind. Die Abstände der Dichtstege 9 sind so ausgelegt, dass zwischen diesen eine Scheibe 10 dicht eingelegt ist.

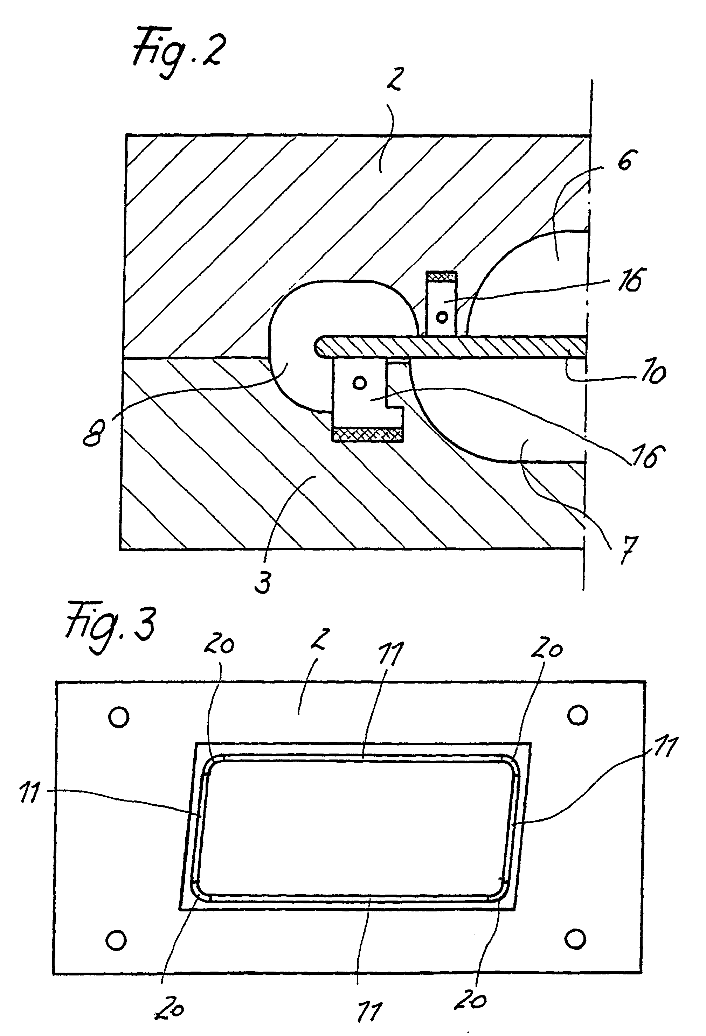

Erfindungsgemäß weisen die Dichtstege 9 Dichtkanten auf, die entweder nur in Teilbereichen oder auch über ihren gesamten verlauf verstellbar sind. Die Ausbildung einer solchen Abdichtung ist in Figur 5 bis 7 anhand eines Beispieles näher erläutert. Es ist dort ein Dichtungssteg Dichtsteg 9 in Form einer starren Dichtkante oberhalb der Scheibe 10 ausgebildet, der an der Scheibe 10 anliegt, während der entsprechende Dichtsteg unterseitig der Scheibe 10 durch eine Dichtkante 11 gebildet ist, die parallel zur Schließrichtung der Formteile 2,3 einstellbar ist. Die Dichtkante 11 ist dabei durch federelastische Elemente 12 gebildet, die beispielsweise durch Unterlagen oder Stellmittel relativ zur Trennebene des Formteiles 3 verstellbar und feststellbar sind. Gemäß der Ausführungsform nach Figur 5 ist die Unterlage durch zwischen die Dichtkante 11 und das sie tragende Formteil 3 eingeschobene Distanzkeile 13 gebildet, so dass starre, unterschiedliche Dichtkonturen eingestellt werden können beziehungsweise eine stärkere Federkraft eingestellt werden kann. Bei der Ausführungsform nach Figur 6 ist das Stellmittel durch eine zwischen der Dichtkante 11 und dem sie tragenden Formteil 3 eingeschraubte Stellschraube 15 gebildet. Auch hierdurch kann eine starre Dichtkontur in Anpassung an die Sollform hergestellt werden. Gemäß der Ausbildung beispielsweise nach Figur 2, die später noch näher beschrieben wird, kann das federelastische Element durch ein Schubgliederband 16 gebildet sein, das im wesentlichen quer zum Längsverlauf der Dichtkante gerichtete formsteife Stabelemente 17 aufweist, die in eine Trägerschicht 18 aus flexiblem Material, beispielsweise Gummi eingesetzt oder von dieser gehalten sind, wobei die Trägerschicht 18 an dem die Dichtkante tragenden Formteil 2 oder 3 fixiert ist. Beispielsweise bei der Ausführungsform nach Figur 5 bis 7 ist das federelastische Element 12 durch eine Blattfeder gebildet, deren Basis 19 an dem die Dichtkante 11 tragenden Formteil, beispielsweise dem Formteil 3, fixiert ist und von deren Basis 19 fingerartige vereinzelte Federelemente 12 gleichgerichtet abragen. Wie insbesondere aus Figur 5 und 6 ersichtlich, sind die fingerartigen Elemente 12 im Längsschnitt etwa L-förmig ausgebildet, wobei der eine Steg der L-Form in die Basis 19 der Blattfeder übergeht und der andere Steg der L-Form zu der Gegenfläche des aufgelegten Formteiles 2 hin vorragt und an dieser oder im Ausführungsbeispiel an der Anlagefläche des dazwischen befindlichen Werkstückes ( Scheibe 10) anliegt.

Der Abstand der zueinander benachbarten Stabelement 17 des Schubgliederbandes 16 oder der fingerartigen Federelemente 12 der Blattfeder ist so gering, dass ein Einfließen von Spritzmasse ausgeschlossen ist.

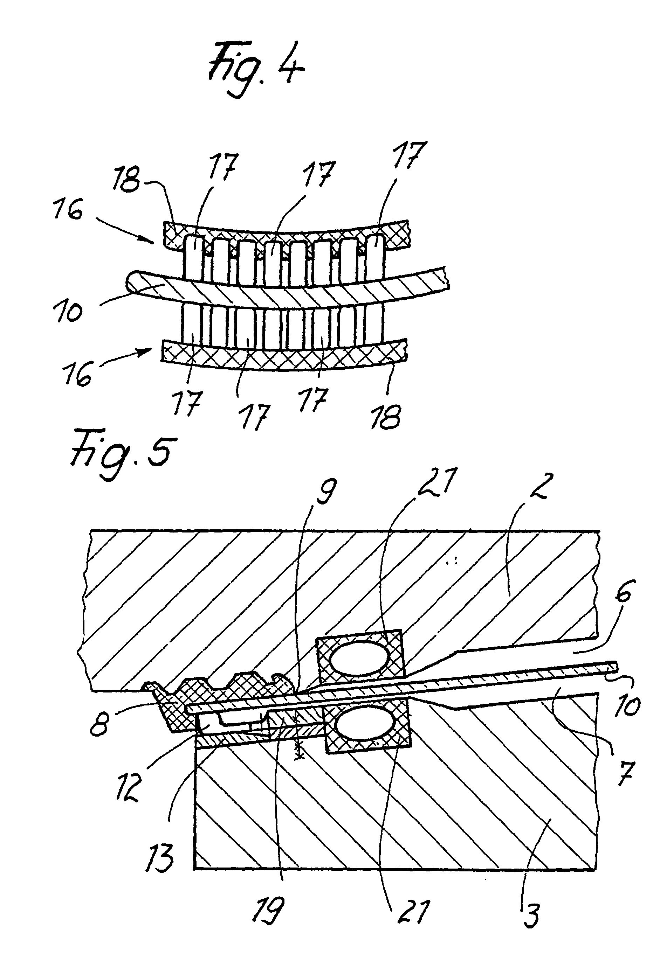

Während bei der Ausführungsform beispielsweise gemäß Figur 5 bis 7 das federelastische Element 12 festgelegt ist, also beim Auflegen der Scheibe 10 beispielsweise nicht federn kann oder der Federweg zumindest starr begrenzt ist, ist bei der Ausführungsform beispielsweise nach Figur 8 und 9 und ebenso bei der Ausbildung nach Figur 2 und 4 die Dichtkante federnd nachgiebig. Dabei stützen sich die federnden Finger (federelastischen Elemente 12) beziehungsweise die federnden Stabelemente 17 an der Scheibe 10 federnd nachgiebig ab, so dass die so gebildete Dichtkante der Wellung oder Kontur oder Wölbung der Scheibe 10 folgen kann und dennoch eine dichte Anlage erreicht ist. Wie anhand der Figur 3 verdeutlicht kann bei einer eckigen Form der Glasscheibe 10 oder einem entsprechenden eckigen Werkstück die federnd nachgiebige Dichtkante 11 durch Einzelelemente gebildet sein, die die Eckbereiche freilassen, wobei in den Eckbereichen 20 starre Dichtkanten in Ergänzung der nachgiebigen Dichtkanten (11) an dem entsprechenden Formteil 2 oder 3 vorgesehen sind.

Bei der Ausführungsform gemäß Figur 5 und Figur 8 sind zusätzlich noch Positioniermittel 21 vorgesehen, die in einer Ausgangslage, die in den Zeichnungsfiguren gezeigt ist, in welcher die Formteile 2,3 der Spritzgießform 1 zum Schließen der Form einander angenähert sind und die Dichtkanten 9 beziehungsweise 11 an der Glasscheibe 10 oder dem Werkstück anliegen, Abstand von der Glasscheibe 10 oder dem Werkstück aufweisen.

Durch diese Ausbildung wird noch verbessert eine sichere und dennoch weiche Halterung der Glasscheibe 10 in der Gießform 1 gewährleistet, wobei aufgrund dieser Anordnung die umlaufende Randkante der Glasscheibe 10 beispielsweise nicht besäumt sein muss, sondern sie kann lediglich durch einen Trennschnitt gebildet sein, der orthogonal zur Flächenerstreckung der Glasscheibe 10 verläuft. Durch das Positioniermittel 21 ist sichergestellt, dass die Randkante der Glasscheibe 10 nicht gegen ortsfeste Anschläge oder dergleichen gedrückt wird und dadurch, dass eine Besäumung der Glasscheibe 10 nicht mehr erforderlich ist, kann das Endprodukt kostengünstiger gefertigt werden.

## Patentansprüche

1. Vorrichtung zum Spritzgießen von Kunststoffteilen, bestehend aus einer aus wenigstens zwei Formteilen (2,3), gebildeten Spritzgießform (1) mit mindestens einer Einlaßöffnung (14) für Spritzmasse, wobei die Formteile (2,3) Dichtkanten aufweisen, die bei geschlossener Spritzgießform (1) dicht aneinander anliegen oder dicht an einer Gegenfläche des jeweils anderen Formteiles (2,3) anliegen, wobei ferner in die Spritzgießform (1) ein Werkstück, z.B. eine Glasscheibe (10), einlegbar ist, an das oder an dessen Rand eine Einfassung aus Kunststoff angespritzt wird, wobei die Formteile (2,3) Trennstege aufweisen, die zueinander hin gerichtet verlaufen und bei geschlossener Spritzgießform (1) unter Ausbildung von Dichtkanten (11) dichtend an Flächen des Werkstückes anliegen, so dass eine abgedichtete Ausnehmung (8) zur Spritzformung der Einfassung gebildet ist, wobei schließlich die Dichtkanten (11) der Formteile (2,3) durch federelastische Elemente gebildet und parallel zur Schließrichtung der Formteile (2,3) der Spritzgießform einstellbar sind, **dadurch gekennzeichnet, dass** jedes federelastische Element durch ein Schubgliederband (16) gebildet ist, das eine Vielzahl von im Wesentlichen quer zum Längsverlauf der zur Schließrichtung der Formteile (2,3) einstellbaren Dichtkante (11) gerichtete, unmittelbar benachbarte, formsteife Stabelemente (17) aufweist, die in eine Trägerschicht (18) aus flexiblem Material eingesetzt oder von dieser gehalten sind, wobei die Trägerschicht (18) an dem die Dichtkante (11) tragenden Formteil (2 oder 3) fixiert ist, und dass der Abstand zueinander benachbarter Stabelemente (17) des Schubgliederbandes (16) so gering ist, dass ein Einfließen von Spritzmasse verhindert ist.

2. Vorrichtung nach Anspruch 1, **dadurch gekennzeichnet, dass** die federelastischen Elemente (12) mittels Unterlagen oder durch Stellmittel relativ zur Trennebene des Formteiles (2 oder 3) verstellbar und feststellbar sind.

3. Vorrichtung nach Anspruch 1 oder 2, **dadurch gekennzeichnet, dass** die Unterlagen durch zwischen der Dichtkante (11) und dem sie tragenden Formteil (2 oder 3) angeordnete Distanzleisten gebildet sind.

4. Vorrichtung nach Anspruch 1 oder 2, **dadurch gekennzeichnet, dass** die Unterlagen durch zwischen die Dichtkante (11) und das sie tragende Formteil (2 oder 3) eingeschobene Distanzkeile (13) gebildet sind.

5. Vorrichtung nach Anspruch 2, **dadurch gekennzeichnet, dass** die Stellmittel durch zwischen der Dichtkante (11) und dem sie tragenden Formteil (2 oder 3) eingeschraubte Stellschrauben (15) gebildet sind.

6. Vorrichtung nach einem der Ansprüche 1 bis 5, **dadurch gekennzeichnet, dass** die Dichtkanten (11) partiell oder vollständig parallel zur Schließrichtung der Formteile (2,3) der Spritzgießform (1) federnd nachgiebig sind.

7. Vorrichtung nach Anspruch 6, **dadurch gekennzeichnet, dass** bei einer Spritzvorrichtung zum Anspritzen einer den Rand eines Werkstückes, z.B. einer Glasscheibe (10), ganz oder teilweise umfassenden Einfassung aus Kunststoff die Formteile (2,3) der Spritzgießform (1) Freiräume (6,7) aufweisen, die von zueinander hin gerichteten Dichtkanten(11) begrenzt sind, gegenüber denen der zu umspritzende Rand des Werkstückes nach außen in eine Spritzform Ausnehmung (8) vorsteht, und dass zur Einspannung des Werkstückes zumindest an einer Außenfläche des Werkstückes mindestens eine partiell oder vollständig umlaufende federnd nachgiebige Dichtkante (11) vorgesehen ist.

8. Vorrichtung nach Anspruch 7, **dadurch gekennzeichnet, dass** an beiden Seiten des Werkstückes zwischen dem entsprechenden Formteil (2 oder 3) und dem Werkstück eine federnd nachgiebige Dichtkante (11), partiell oder vollständig umlaufend, angeordnet ist.

9. Vorrichtung nach einem der Ansprüche 7 oder 8, **dadurch gekennzeichnet, dass** bei einem eckigen Werkstück z.B. einer eckigen Glasscheibe (10), die federnd nachgiebige Dichtkante (11) aus Einzelelementen gebildet ist, wobei die Einzelelemente die Eckbereiche (20) freilassen und in den Eckbereichen starre Dichtkanten in Ergänzung der nachgiebigen Dichtkanten (11) an den Formteilen (2 oder 3) vorgesehen sind.

10. Vorrichtung nach einem der Ansprüche 1 bis 9, **dadurch gekennzeichnet, dass** die Randkante des Werkstisches als orthogonale Trennkante oder Schnittkante ohne Besäumung ausgebildet ist.

## Claims

1. Device for injection moulding of plastic parts comprising an injection mould (1) formed from at least two mouldings (2, 3) with at least one inlet opening (14) for the injection moulding compound, where the mouldings (2, 3) have sealing edges which when the injection mould (1) is closed lie tightly against each other or in each case against a counter-surface of the other mould part (2, 3), where further in the injection mould (1) can be placed a workpiece e.g. a glass pane (10) on the edge of which is moulded a border of plastic, where the mouldings (2, 3) have separating webs which run towards each other and when the injection moulding (1) Is closed lie tightly on the surface of the workpiece forming sealing edges (11) so that a sealed recess (8) is formed for injection moulding of the border, where finally the sealing edges (11) of the mouldings (2, 3) are formed by spring elastic elements and are adjustable parallel to the closing direction of the mouldings (2, 3) of the injection mould, **characterised in that** each spring elastic element Is formed by a thrust link conveyor (16) which has a multiplicity of directly adjacent, dimensionally rigid rod elements (17) directed essentially transverse to the longitudinal path of the sealing edges (11) adjustable to the closing direction of the mouldings (2, 3), said rod elements being inserted or held by a carrier layer (18) of flexible material, where the carrier layer (18) is fixed to the moulding (2 or 3) carrying the sealing edge (11), and that the distance between two adjacent rod elements (17) of the thrust link conveyor (16) is so slight that the penetration of injection moulding compound is prevented.

2. Device according to claim 1, **characterised in that** the spring elastic elements (12) can be adjusted and defined by means of shims or adjustment means relative to the parting plane of the mouldings (2 or 3).

3. Device according to claim 1 or 2, **characterised in that** the shims are formed by spacer strips arranged between the sealing edge (11) and the moulding (2 or 3) carrying this.

4. Device according to claim 1 or 2, **characterised in that** the shims are formed by spacer wedges (13) pushed between the sealing edge (11) and the moulding (2 or 3) carrying this.

5. Device according to claim 2, **characterised in that** the adjustment means are formed by setscrews (15) screwed between the sealing edge (11) and the moulding (2 or 3) carrying this.

6. Device according to any of claims 1 to 5, **characterised in that** the sealing edges (11) are sprung flexible partially or completely parallel to the closing direction of the mouldings (2, 3) of the Injection moulding (1).

7. Device according to claim 6, **characterised in that** for an injection device for moulding of a border of plastic fully or partly surrounding the edge of a workpiece e.g. a glass pane (10), the mouldings (2, 3) of the injection mould (1) have spaces (6, 7) limited by sealing edges (11) directed towards each other, opposite which the edge of the workpiece to be overmoulded protrudes outwards into a recess (8) in the injection mould and that to clamp the workpiece, at least one sprung flexible sealing edge (11) is provided at least on one outer surface of the workpiece and surrounding this partly or completely.

8. Device according to claim 7, **characterised in that** on both sides of the workplece between the corresponding moulding (2 or 3) and the workpiece is arranged a sprung flexible sealing edge (11) surrounding this partly or completely.

9. Device according to one of claims 7 or 8, **characterised in that** for an angular workpiece e.g. an angular glass pane (10), the sprung flexible sealing edge (11) is formed of individual elements, where the individual elements leave the comer areas (20) free and in the comer areas are provided rigid sealing edges to supplement the flexible sealing edges (11) on the mouldings (2 or 3).

10. Device according to any of claims 1 to 9, **characterised in that** the edge of the workpiece is formed as orthogonal parting edge or cut edge without trimming.

## Revendications

1. Dispositif de moulage par injection d'articles en matière plastique, constitué d'un moule d'injection (1) formé d'au moins deux parties de moule (2, 3) et pourvu d'au moins une ouverture d'admission (14) de matière à mouler par injection, les parties de moule (2, 3) présentant des arêtes d'étanchéité qui, lorsque le moule d'injection (I) est fermé, s'appliquent en étanchéité les unes contre les autres ou s'appliquent en étanchéité contre une face antagoniste de l'autre partie de moule (2,3) respective, une pièce, par exemple une vitre (10), pouvant en outre être insérée dans le moule d'injection (1), sur laquelle ou sur le bord de laquelle un encadrement en matière plastique est moulé par injection, les parties de moule (2, 3) présentant des nervures séparatrices, qui s'étendent les unes vers les autres et qui, lorsque le moule d'injection (1) est fermé, s'appliquent en étanchéité contre des faces de la pièce en formant des arêtes d'étanchéité (11), formant ainsi un évidement étanché (8) pour le moulage par injection de l'encadrement, et enfin les arêtes d'étanchéité (11) des parties de moule (2, 3) étant formées par des éléments à élasticité de ressort et pouvant être réglées parallèlement à la direction de fermeture des parties de moule (2, 3) du moule d'injection, **caractérisé en ce que** chaque élément à élasticité de ressort est formé par une bande d'éléments de poussée (16) qui présente une multiplicité d'éléments en bâtons (17) directement voisins, résistants à la déformation, orientés essentiellement transversalement à l'allure longitudinale de l'arête d'étanchéité (11) réglable vers la direction de fermeture des parties de moule (2, 3), éléments qui sont insérés dans une couche porteuse (18) en matériau flexible ou sont maintenus par cette couche, la couche porteuse (18) étant fixée en position sur la partie de moule (2 ou 3) portant l'arête d'étanchéité (11), et **en ce que** la distance entre les éléments en bâtons (17) mutuellement voisins de la bande d'éléments de poussée (16) est suffisamment faible pour empêcher la matière à mouler par injection de s'écouler entre eux.

2. Dispositif selon la revendication 1, **caractérisé en ce que** les éléments à élasticité de ressort (12) peuvent être réglés et immobilisés par rapport au plan de séparation de la partie de moule (2 ou 3) au moyen de cales ou par des moyens de réglage.

3. Dispositif selon la revendication 1 ou 2, **caractérisé en ce que** les cales sont formées par des baguettes d'écartement disposées entre l'arête d'étanchéité (11) et la partie de moule (2 ou 3) qui la porte.

4. Dispositif selon la revendication 1 ou 2, **caractérisé en ce que** les cales sont formées par des cales d'écartement (13) disposées entre l'arête d'étanchéité (11) et la partie de moule (2 ou 3) qui la porte.

5. Dispositif selon la revendication 2, **caractérisé en ce que** les moyens de réglage sont formés par des vis de réglage (15) vissées entre l'arête d'étanchéité (11) et la partie de moule (2 ou 3) qui la porte.

6. Dispositif selon l'une quelconque des revendications 1 à 5, **caractérisé en ce que** les arêtes d'étanchéité (11) sont partiellement ou totalement élastiquement flexibles parallèlement à la direction de fermeture des parties de moule (2, 3) du moule d'injection (1).

7. Dispositif selon la revendication 6, **caractérisé en ce que**, pour un dispositif d'injection destiné à mouler par injection un encadrement en matière plastique entourant totalement ou partiellement le bord d'une pièce, par exemple d'une vitre (10), les parties de moule (2, 3) du moule d'injection (1) présentent des espaces libres (6, 7) qui sont délimités par des arêtes d'étanchéité (11) orientées en vis-à-vis, par rapport auxquelles le bord de la pièce à enrober par injection dépasse vers l'extérieur dans un évidement (8) du moule d'injection, et **en ce que**, pour enserrer la pièce, au moins une arête d'étanchéité (11) élastiquement flexible, partiellement ou totalement entourante, est prévue au moins sur une face extérieure de la pièce.

8. Dispositif selon la revendication 7, **caractérisé en ce qu'**une arête d'étanchéité (11) élastiquement flexible, partiellement ou totalement entourante, est disposée sur les deux côtés de la pièce, entre la partie de moule correspondante (2 ou 3) et la pièce.

9. Dispositif selon la revendication 7 ou 8, **caractérisé en ce que**, en présence d'une pièce polygonale, par exemple d'une vitre polygonale (10), l'arête d'étanchéité (11) élastiquement flexible est formée d'éléments individuels, les éléments individuels laissant libres les régions de coins (20) et des arêtes d'étanchéité rigides étant prévues en complément des arêtes d'étanchéité flexibles (11) sur les parties de moule (2 ou 3) dans les régions de coins.

10. Dispositif selon l'une quelconque des revendications 1 à 9, **caractérisé en ce que** l'arête de bord de la pièce est conçue comme arête de séparation ou arête de coupe orthogonale sans rognage.
